# EUROPEAN PATENT APPLICATION

(11) **EP 4 760 420 A1**
(43) Date of publication of application: **17.06.2026**
(21) Application number: 24851456.4
(22) Date of filing: 01.07.2024
(51) Int. Cl.: G05B 11/36, H02P 29/00

(54) **ADJUSTMENT ASSISTANCE METHOD FOR MOTOR CONTROL DEVICE, ADJUSTMENT ASSISTANCE PROGRAM FOR MOTOR CONTROL DEVICE, AND ADJUSTMENT ASSISTANCE SYSTEM FOR MOTOR CONTROL DEVICE**

(30) Priority: 07.08.2023 JP 2023128694
(71) Applicant: Panasonic Intellectual Property Management Co., Ltd., Kadoma-shi, Osaka 571-0057 (JP)
(72) Inventor: SHIRAKI, Yuta, Osaka 571-0057 (JP); FUJIWARA, Hiroshi, Osaka 571-0057 (JP)
(74) Representative: SSM Sandmair
(86) International application number: PCT/JP2024/023823
(87) International publication number: WO 2025/033025

(57) **Abstract**

An adjustment assistance method for motor control device (1) that improves workability at the time of adjusting a control parameters is an adjustment assistance method for motor control device 1 including controller (12), first calculation part (13), and second calculation part (14). First calculation part (13) calculates a first frequency characteristic based on a second set value. Second calculation part (14) calculates a second frequency characteristic. An adjustment assistance method for motor control device (1) includes an input step and a display step. In the input step, the input of the first set value and the second set value by the user is received. In the display step, the first frequency characteristic that is a calculation result of first calculation part (13) and the second frequency characteristic that is a calculation result of second calculation part (14) are displayed to be superimposed on each other on display part (42).

## Description

### TECHNICAL FIELD

The present disclosure generally relates to an adjustment assistance method for a motor control device, an adjustment assistance program for a motor control device, and an adjustment assistance system for a motor control device. More specifically, the present disclosure relates to an adjustment assistance method for a motor control device, an adjustment assistance program for a motor control device, and an adjustment assistance system for a motor control device for assisting adjustment of a control parameter in the motor control device.

### BACKGROUND ART

PTL 1 describes a method of calculating a control parameter in a motor control device. In the calculation method described in PTL 1, a load frequency characteristic from a first torque command input point or a second torque command input point to a motor speed output point is calculated, the control parameter is adjusted based on the calculated load frequency characteristic, and a speed open loop characteristic in the adjusted control parameter is calculated and displayed on a display.

### Citation List

### Patent Literature

PTL 1: Unexamined Japanese Patent Publication No. 2010-142117

### SUMMARY OF THE INVENTION

In the calculation method described in PTL 1, it is desired to improve workability at the time of adjusting the control parameter.

An object of the present disclosure is to provide an adjustment assistance method for a motor control device, an adjustment assistance program for a motor control device, and an adjustment assistance system for a motor control device capable of improving workability at the time of adjusting a control parameter.

An adjustment assistance method for a motor control device according to an aspect of the present disclosure is an adjustment assistance method for a motor control device including a controller, a first calculation part, and a second calculation part. The controller generates a torque command based on a first set value and outputs the torque command to a motor in a manner that an operation amount of the motor detected by a detection part that detects the operation amount follows the operation command based on the first set value. The first set value is a set value of a first control parameter input by a user. The first calculation part calculates a first frequency characteristic based on a second set value. The second set value is a set value of a second control parameter input by the user. The first frequency characteristic is a frequency characteristic of one or more filters included in the controller. The second calculation part calculates a second frequency characteristic. The second frequency characteristic is a frequency characteristic of the operation amount with respect to the operation command in a closed loop including the controller. The adjustment assistance method for a motor control device includes an input step and a display step. In the input step, the input of the first set value and the second set value by the user is received. In the display step, the first frequency characteristic that is a calculation result of the first calculation part and the second frequency characteristic that is a calculation result of the second calculation part are displayed to be superimposed on each other on a display part.

An adjustment assistance program for a motor control device according to another aspect of the present disclosure is a program for causing one or more processors to execute an adjustment assistance method for a motor control device.

An adjustment assistance system for a motor control device according to still another aspect of the present disclosure is an adjustment assistance system for a motor control device including a controller, a first calculation part, and a second calculation part. The controller generates a torque command and outputs the torque command to a motor in a manner that an operation amount of a motor detected by a detection part that detects the operation amount follows the operation command based on the first set value. The first set value is a set value of a first control parameter input by a user. The first calculation part calculates a first frequency characteristic based on a second set value. The second set value is a set value of a second control parameter input by the user. The first frequency characteristic is a frequency characteristic of one or more filters included in the controller. The second calculation part calculates a second frequency characteristic. The second frequency characteristic is a frequency characteristic of the operation amount with respect to the operation command in a closed loop including the controller. The adjustment assistance system for a motor control device includes an input part and a display controller. The input part receives the input of the first set value and the second set value by the user. The display controller displays the first frequency characteristic that is a calculation result of the first calculation part and the second frequency characteristic that is a calculation result of the second calculation part to be superimposed on each other on a display part.

According to the adjustment assistance method for a motor control device, the adjustment assistance program for a motor control device, and the adjustment assistance system for a motor control device according to an aspect of the present disclosure, workability at the time of adjustment of the control parameter can be improved.

### BRIEF DESCRIPTION OF THE DRAWINGS

Fig. 1 is a block diagram of a motor control device and an adjustment assistance system according to an exemplary embodiment of the present disclosure.
Fig. 2 is a block diagram of a controller in the motor control device according to the exemplary embodiment of the present disclosure.
Fig. 3 is a Bode diagram illustrating an example of a frequency characteristic of a notch filter included in the controller in the motor control device according to the exemplary embodiment of the present disclosure.
Fig. 4 is a Bode diagram illustrating an example of a frequency characteristic of a closed loop including the controller in the motor control device according to the exemplary embodiment of the present disclosure.
Fig. 5 is a Bode diagram in which a frequency characteristic of the notch filter in Fig. 3 and a frequency characteristic of the closed loop in Fig. 4 are superimposed.
Fig. 6 is a Bode diagram illustrating an example of a frequency characteristic of the closed loop including the controller when a control parameter of the notch filter is adjusted in the motor control device according to the exemplary embodiment of the present disclosure.

### DESCRIPTION OF EMBODIMENTS

Hereinafter, an adjustment assistance method for a motor control device, an adjustment assistance program for a motor control device, and an adjustment assistance system for a motor control device according to an exemplary embodiment of the present disclosure will be described with reference to the drawings. Each drawing described in the following exemplary embodiment is a schematic diagram. In addition, the configuration described in the following exemplary embodiment is merely an example of the present disclosure. The present disclosure is not limited to the following exemplary embodiment, and various modifications can be made in accordance with design and the like as long as effects of the present disclosure can be achieved.

### (Exemplary embodiment)

### (1) Overview

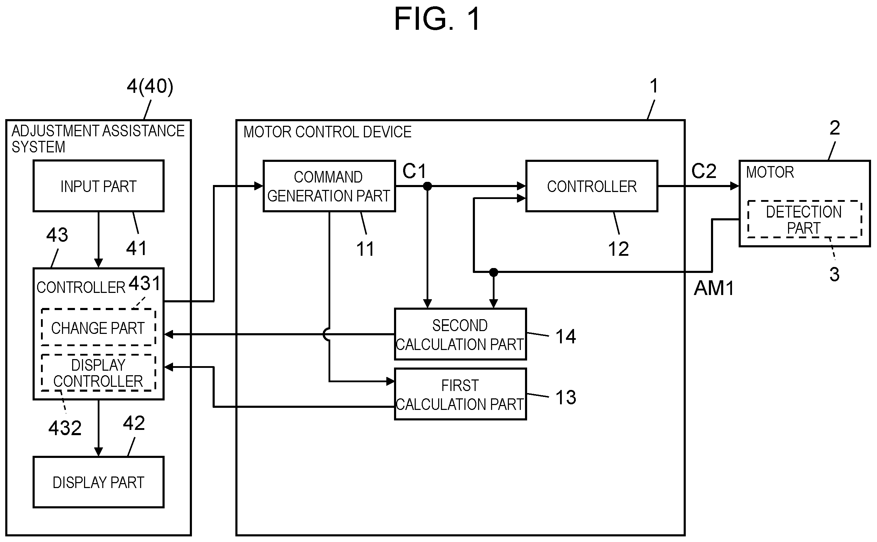

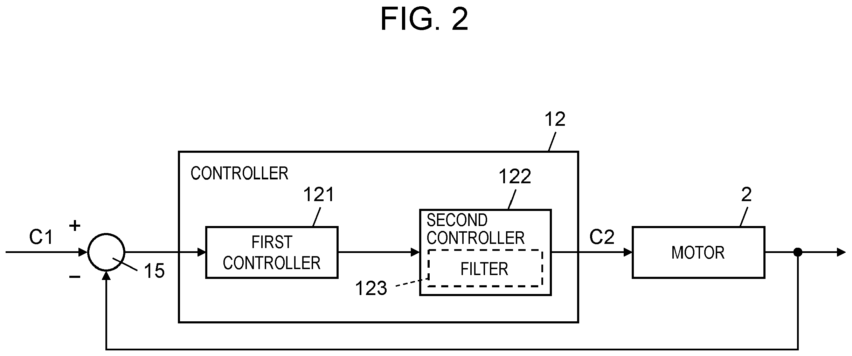

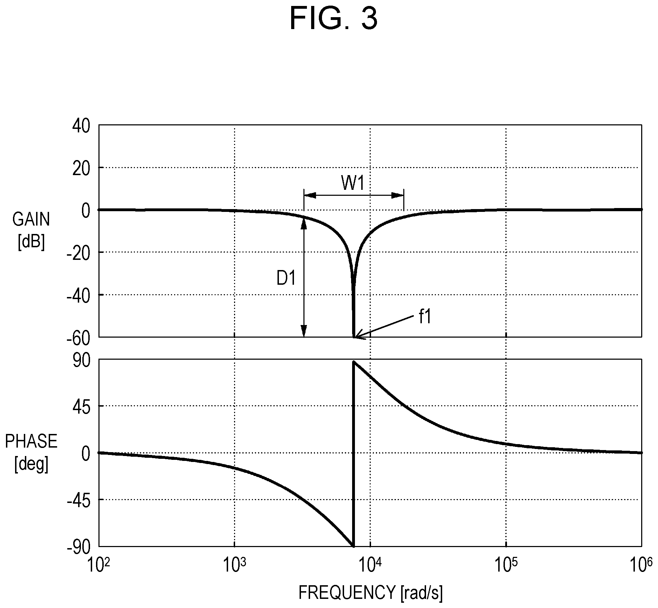

First, an overview of an adjustment assistance method for motor control device 1 and adjustment assistance system 4 for motor control device 1 according to the exemplary embodiment will be described with reference to Figs. 1 to 3. Fig. 1 is a block diagram of motor control device 1 and adjustment assistance system 4 according to the exemplary embodiment of the present disclosure. Fig. 2 is a block diagram of controller 12 in motor control device 1 according to the exemplary embodiment of the present disclosure. Fig. 3 is a Bode diagram illustrating an example of a frequency characteristic of a notch filter (filter 123) included in controller 12 in motor control device 1 according to the exemplary embodiment of the present disclosure.

An adjustment assistance method for motor control device 1 according to the exemplary embodiment (hereinafter, abbreviated as an "adjustment assistance method".) is a method for assisting adjustment of control parameters in motor control device 1. More specifically, the adjustment assistance method is a method for assisting adjustment of control parameters of filter 123 (see Fig. 2) included in controller 12 included in motor control device 1.

In the present exemplary embodiment, as an example, filter 123 is a notch filter having a function of removing a signal of a specific frequency (frequency f1 in Fig. 3). The notch filter has a plurality of control parameters. As illustrated in Fig. 3, the plurality of control parameters include frequency f1, width W1, and depth D1. Frequency f1 is a frequency having a very small gain to attenuate a signal at frequency f1. In the example of Fig. 3, the gain at frequency f1 is -60 dB. Width W1 is, for example, a bandwidth of a frequency at which the gain is attenuated to be less than or equal to -3 dB. Depth D1 is an attenuation amount of the gain at frequency f1. In the example of Fig. 3, an attenuation amount at frequency f1 is 60 dB.

Motor control device 1 is a device for controlling motor 2. Motor 2 is, for example, a servomotor used for driving equipment such as a robot arm. Motor control device 1 is, for example, a servo amplifier that controls a servomotor.

As illustrated in Fig. 1, motor control device 1 includes controller 12, first calculation part 13, and second calculation part 14. Controller 12 generates torque command C2 based on a first set value and outputs torque command C2 to motor 2 in a manner that operation amount AM1 detected by detection part 3 that detects operation amount AM1 of motor 2 follows operation command C1 of motor 2 based on a first set value. The first set value is a set value of a first control parameter input by a user. First calculation part 13 calculates a first frequency characteristic based on a second set value. The second set value is a set value of a second control parameter input by the user. The first frequency characteristic is a frequency characteristic of one or more filters 123 included in controller 12. Second calculation part 14 calculates a second frequency characteristic. The second frequency characteristic is a frequency characteristic of operation amount AM1 with respect to operation command C1 in a closed loop including controller 12. Here, the first control parameter is a control parameter of filter 123 included in controller 12, and is used when controller 12 generates torque command C2. In addition, the second control parameter is a control parameter of filter 123 included in controller 12, and is used when first calculation part 13 calculates the first frequency characteristic.

The adjustment assistance method includes an input step and a display step. In the input step, the input of the first set value and the second set value by the user is received. In the display step, the first frequency characteristic that is a calculation result of first calculation part 13 and the second frequency characteristic that is a calculation result of second calculation part 14 are displayed to be superimposed on each other on display part 42.

In the adjustment assistance method according to the exemplary embodiment, in the display step, the first frequency characteristic that is the frequency characteristic of filter 123 and the second frequency characteristic that is the frequency characteristic of the closed loop including controller 12 are displayed to be superimposed on each other on display part 42. Thus, the user viewing the first frequency characteristic and the second frequency characteristic displayed on display part 42 can visually confirm how much the first frequency characteristic is to be adjusted with respect to the second frequency characteristic. As a result, workability at the time of adjusting the control parameter can be improved as compared with a case where only the second frequency characteristic is displayed on the display part.

In addition, as an example, the adjustment assistance method according to the exemplary embodiment is executed by adjustment assistance system 4 for motor control device 1 (hereinafter, abbreviated as "adjustment assistance system 4".) illustrated in Fig. 1. In other words, adjustment assistance system 4 is an aspect for embodying the adjustment assistance method described above.

As illustrated in Fig. 1, adjustment assistance system 4 according to the exemplary embodiment includes input part 41 and display controller 432. Input part 41 receives the input of the first set value and the second set value by the user. Display controller 432 displays the first frequency characteristic that is the calculation result of first calculation part 13 and the second frequency characteristic that is the calculation result of second calculation part 14 to be superimposed on each other on display part 42.

Here, adjustment assistance system 4 includes, as main configurations, a computer system including one or more processors and one or more memories. In other words, the adjustment assistance method according to the exemplary embodiment is used on a computer system (adjustment assistance system 4). That is, the adjustment assistance method can also be embodied by a program.

### (2) Details

Next, configurations of motor control device 1 and adjustment assistance system 4 according to the exemplary embodiment will be described with reference to Figs. 1 to 3.

### (2.1) Motor

Motor 2 is, for example, a servomotor used for driving equipment such as a robot arm. More specifically, motor 2 is, for example, a rotary servomotor. As illustrated in Fig. 1, motor 2 includes detection part 3. Detection part 3 includes, for example, a rotary encoder. Detection part 3 detects operation amount AM1 of motor 2. Detection part 3 detects, for example, a rotation speed of motor 2 as operation amount AM1 of motor 2. Detection part 3 outputs detected operation amount AM1 of motor 2 to controller 12 and second calculation part 14 of motor control device 1.

### (2.2) Motor control device

Motor control device 1 is, for example, a servo amplifier that controls motor 2 including a servomotor. Motor control device 1 includes, for example, a computer system. The computer system mainly includes a processor and a memory as hardware. A processor executes a program recorded in the memory of the computer system to implement a function as motor control device 1. The program may be recorded in advance in the memory of the computer system, may be provided through a telecommunication line, or may be provided by being recorded in a non-transitory recording medium such as a memory card, an optical disk, or a hard disk drive readable by the computer system.

As illustrated in Fig. 1, motor control device 1 includes command generation part 11, controller 12, first calculation part 13, and second calculation part 14.

Command generation part 11 generates operation command C1 for motor 2. Operation command C1 includes, for example, a target speed command value of motor 2. Command generation part 11 outputs generated operation command C1 to controller 12 and second calculation part 14. In addition, in a case where input part 41 of adjustment assistance system 4 receives the input of the first set value, command generation part 11 outputs the first set value to controller 12. In addition, in a case where input part 41 receives the input of the second set value, command generation part 11 outputs the second set value to first calculation part 13.

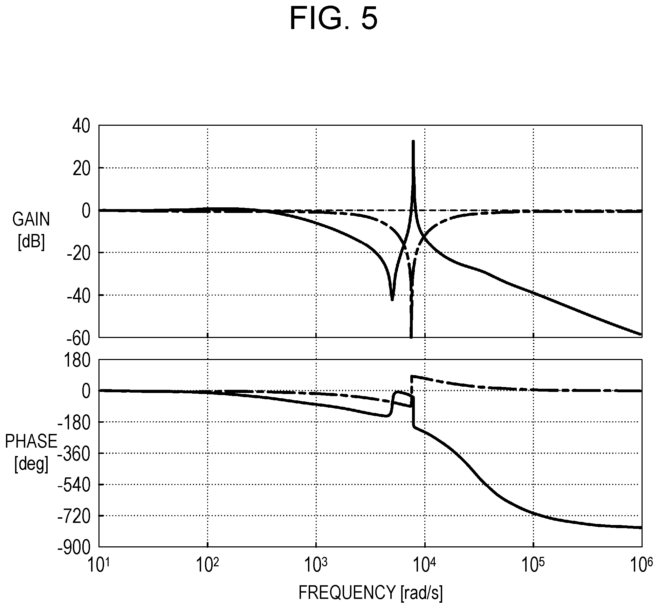

Controller 12 generates torque command C2 in a manner that operation amount AM1 of motor 2 detected by detection part 3 follows operation command C1, and outputs torque command C2 to motor 2. Here, in the frequency characteristic (second frequency characteristic) of operation amount AM1 with respect to operation command C1 in the closed loop including controller 12, as illustrated in Fig. 5 to be described later, the gain is more than or equal to 0 dB due to the influence of resonance at a specific frequency (resonance frequency), and as a result, feedback control including controller 12 may become unstable.

As illustrated in Fig. 2, controller 12 includes first controller 121 and second controller 122. First controller (speed proportional-integral controller) 121 performs proportional-integral control (PI control) based on a difference output from subtractor 15, and outputs the result to second controller 122. The difference output from subtractor 15 is a difference between the target speed command value included in operation command C1 output from command generation part 11 and the rotation speed of motor 2 detected by detection part 3. Second controller (torque command controller) 122 generates torque command C2 based on the calculation result of first controller 121. Torque command C2 includes a current command value corresponding to a torque to be generated in motor 2. That is, second controller 122 (controller 12) outputs a current command value corresponding to operation command C1 to motor 2.

In addition, as illustrated in Fig. 2, second controller 122 includes filter 123. As described above, filter 123 is a notch filter. The notch filter includes, as control parameters, frequency f1, width W1, and depth D1 (see Fig. 3). As described above, in the second frequency characteristic in the closed loop including controller 12, the gain is more than or equal to 0 dB at the resonance frequency, and as a result, the feedback control including controller 12 may become unstable. In such motor control device 1, the user needs to adjust the control parameters of the notch filter such that frequency f1, width W1, and depth D1 of the notch filter coincide with the resonance frequency, width, and depth of the second frequency characteristic in the closed loop in order to stabilize the feedback control including controller 12. Thus, in the technical field of motor control device 1, it is desired to improve workability at the time of adjusting the control parameter. In the adjustment assistance method according to the exemplary embodiment, in order to solve the above problem, as illustrated in Fig. 5 to be described later, the first frequency characteristic that is the frequency characteristic of filter 123 and the second frequency characteristic that is the frequency characteristic of the closed loop including controller 12 are displayed to be superimposed on each other on display part 42 of adjustment assistance system 4.

Here, in motor control device 1 according to the exemplary embodiment, controller 12 generates torque command C2 and outputs torque command C2 to motor 2 in a manner that operation amount AM1 of motor 2 detected by detection part 3 follows operation command C1 based on the first set value. The first set value is a set value of the first control parameter input by the user. The first control parameter is a control parameter of filter 123, and is used when controller 12 generates torque command C2.

First calculation part 13 calculates the first frequency characteristic based on the second set value. The second set value is a set value of the second control parameter input by the user. The second control parameter is a control parameter of filter 123, and is used when first calculation part 13 calculates the first frequency characteristic. That is, the first frequency characteristic is a frequency characteristic of filter 123 based on the second set value. In addition, when the user changes the second set value, first calculation part 13 recalculates the first frequency characteristic based on the changed second set value. First calculation part 13 outputs the calculated (or recalculated) first frequency characteristic to controller 43 of adjustment assistance system 4 to be described later.

Second calculation part 14 calculates a second frequency characteristic. The second frequency characteristic is a frequency characteristic of operation amount AM1 with respect to operation command C1 in a closed loop including controller 12. More specifically, second calculation part 14 calculates the second frequency characteristic based on operation command C1 from command generation part 11 and operation amount AM1 from detection part 3. Second calculation part 14 outputs the calculated second frequency characteristic to controller 43 of adjustment assistance system 4.

### (2.3) Adjustment assistance system

Adjustment assistance system 4 includes, for example, a computer system. The computer system mainly includes a processor and a memory as hardware. A processor executes a program recorded in the memory of the computer system to implement a function as adjustment assistance system 4. The program may be recorded in advance in the memory of the computer system, may be provided through a telecommunication line, or may be provided by being recorded in a non-transitory recording medium such as a memory card, an optical disk, or a hard disk drive readable by the computer system. In the present exemplary embodiment, as an example, adjustment assistance system 4 is personal computer 40.

As illustrated in Fig. 1, adjustment assistance system 4 includes input part 41, display part 42, and controller 43.

Input part 41 receives a predetermined input by the user. Specifically, input part 41 receives the input of the first set value and the second set value by the user. In the present exemplary embodiment, as described above, adjustment assistance system 4 is personal computer 40, and input part 41 includes an input interface such as a keyboard, a mouse, or a touch panel, for example. In the present exemplary embodiment, the processing by input part 41 is the input step. That is, the adjustment assistance method according to the exemplary embodiment includes an input step of receiving the input of the first set value and the second set value by the user.

Display part 42 includes, for example, a liquid crystal display. As will be described later, display part 42 displays the first frequency characteristic that is the calculation result of first calculation part 13 and the second frequency characteristic that is the calculation result of second calculation part 14 to be superimposed on each other (see Fig. 5). Note that, in a case where adjustment assistance system 4 includes a touch panel display, input part 41 and display part 42 may be shared by a touch panel display.

Controller 43 is electrically connected to each of input part 41 and display part 42. Controller 43 sets the first set value in accordance with the input received by input part 41. In addition, controller 43 sets the second set value in accordance with the input received by input part 41. Controller 43 outputs a control signal to display part 42 to display a predetermined video (image) on display part 42. As illustrated in Fig. 1, controller 43 includes change part 431 and display controller 432.

Change part 431 changes the first set value. More specifically, when the user changes the second set value, change part 431 changes the first set value such that the first control parameter becomes equal to the second control parameter. In the present exemplary embodiment, the processing by change part 431 corresponds to a change step. That is, the adjustment assistance method according to the exemplary embodiment further includes the change step in addition to the input step described above and a display control step to be described later. In the change step, when the user changes the second set value, the first set value is changed such that the first control parameter becomes equal to the second control parameter.

Display controller 432 controls display part 42. Display controller 432 controls display part 42 to display a predetermined video (image) on display part 42. Specifically, display controller 432 controls display part 42 to display the first frequency characteristic that is the calculation result of first calculation part 13 and the second frequency characteristic that is the calculation result of second calculation part 14 to be superimposed on each other on display part 42 (see Fig. 5). In the present exemplary embodiment, the processing by display controller 432 corresponds to the display step. That is, the adjustment assistance method according to the present exemplary embodiment includes the display step of displaying the first frequency characteristic that is the calculation result of first calculation part 13 and the second frequency characteristic that is the calculation result of second calculation part 14 to be superimposed on each other on display part 42.

In addition, in a case where first calculation part 13 recalculates the first frequency characteristic, display controller 432 displays the recalculated first frequency characteristic on display part 42. That is, in the display step, in a case where first calculation part 13 recalculates the first frequency characteristic, the display controller displays the recalculated first frequency characteristic on display part 42.

### (3) Display example

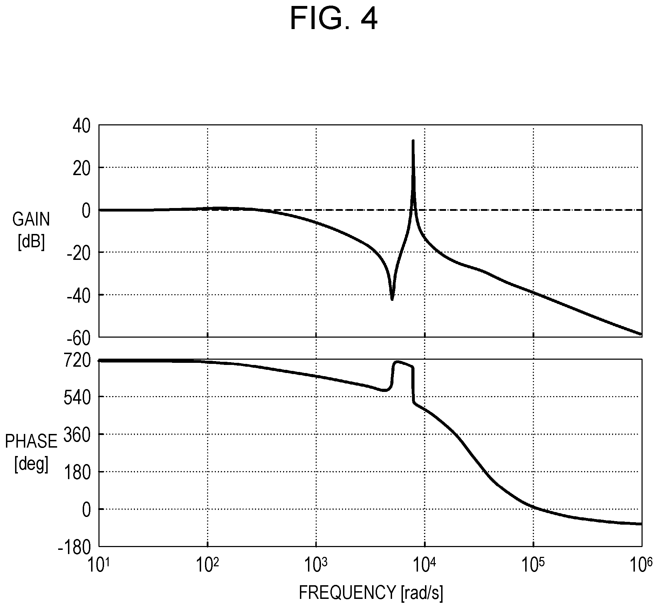

Next, a display example of display part 42 by the adjustment assistance method for motor control device 1 according to the exemplary embodiment will be described with reference to Figs. 4 to 6. Figs. 4 to 6 are Bode diagrams displayed on display part 42 by the adjustment assistance method.

Fig. 4 is a Bode diagram illustrating an example of the second frequency characteristic that is the calculation result of second calculation part 14. In the example of Fig. 4, the control parameter of filter 123 is not adjusted, and a region where the gain exceeds 0 dB due to the influence of resonance is included. Thus, in the frequency characteristic illustrated in Fig. 4, the feedback control including controller 12 becomes unstable.

Fig. 5 is a Bode diagram in which the first frequency characteristic (see Fig. 3) that is the calculation result of first calculation part 13 is superimposed on the second frequency characteristic illustrated in Fig. 4. That is, Fig. 5 is a Bode diagram in which the first frequency characteristic that is the calculation result of first calculation part 13 and the second frequency characteristic that is the calculation result of second calculation part 14 are displayed to be superimposed on each other on display part 42. In Fig. 5, a solid line represents the second frequency characteristic, and an alternate long and short dash line represents the first frequency characteristic. That is, in Fig. 5, the solid line represents the frequency characteristic of the closed loop including controller 12, and the alternate long and short dash line represents the frequency characteristic of filter 123.

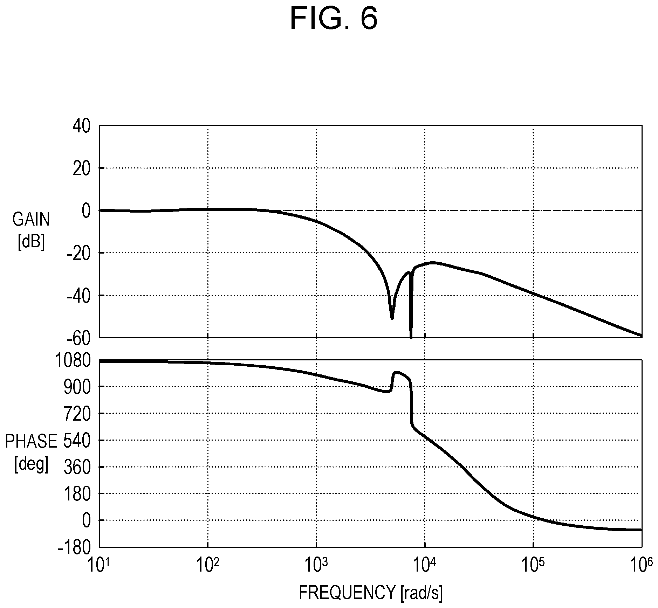

Fig. 6 is a Bode diagram illustrating an example of the frequency characteristic of the closed loop including controller 12 when the control parameter (first control parameter) of filter 123 (notch filter) is adjusted in motor control device 1 according to the exemplary embodiment of the present disclosure.

In the example of Fig. 5, the control parameter (first control parameter) of filter 123 (notch filter) is adjusted such that frequency f1 (see Fig. 3) in the first frequency characteristic coincides with a peak frequency (resonance frequency) in the second frequency characteristic. As a result, the first frequency characteristic is applied to the second frequency characteristic, and thus, the gain can be set to be less than or equal to 0 dB at all frequencies as illustrated in Fig. 6. As a result, the feedback control including controller 12 can be stabilized.

As described above, in the technical field of motor control device 1, it is desired to improve workability at the time of adjusting the control parameter. Thus, as illustrated in Fig. 5, the first frequency characteristic that is the frequency characteristic of filter 123 and the second frequency characteristic that is the frequency characteristic of the closed loop including controller 12 are displayed to be superimposed on each other on display part 42, and thus, it is possible to visually confirm an adjustment amount of the control parameter (first control parameter) of filter 123 with respect to the second frequency characteristic. As a result, workability at the time of adjusting the control parameter can be improved as compared with a case where only the second frequency characteristic is displayed on the display part.

Here, the second frequency characteristic in Fig. 5 is a second frequency characteristic before the control parameter is adjusted by the user. That is, in the example of Fig. 5, in the display step, the second frequency characteristic based on the second set value before being changed by the user is displayed as the second frequency characteristic on display part 42.

### (4) Effects

In the adjustment assistance method for motor control device 1 according to the exemplary embodiment, in the display step, the first frequency characteristic that is the frequency characteristic of filter 123 and the second frequency characteristic that is the frequency characteristic of the closed loop including controller 12 are displayed to be superimposed on each other on display part 42. Thus, the user viewing the first frequency characteristic and the second frequency characteristic displayed on display part 42 can visually confirm how much the first frequency characteristic is to be adjusted with respect to the second frequency characteristic. As a result, workability at the time of adjusting the control parameter can be improved as compared with a case where only the second frequency characteristic is displayed on the display part.

In addition, in the adjustment assistance method for motor control device 1 according to the exemplary embodiment, first calculation part 13 calculates the first frequency characteristic, and second calculation part 14 calculates the second frequency characteristic. Thus, a calculation amount in each calculation part can be reduced as compared with a case where the first frequency characteristic and the second frequency characteristic are calculated by one calculation part.

In addition, in the adjustment assistance method for motor control device 1 according to the exemplary embodiment, the closed loop including controller 12 is a speedclosed loop based on a speed of motor 2. In this case, as illustrated in Fig. 4, since the gain adjustment is performed in a region having a relatively high frequency, measurement accuracy can be improved.

In addition, in the adjustment assistance method for motor control device 1 according to the exemplary embodiment, the second frequency characteristic based on the second set value before being changed by the user is displayed as the second frequency characteristic on display part 42. As a result, in addition to the first frequency characteristic, the second frequency characteristic before being changed by the user can be displayed on display part 42.

In addition, in the adjustment assistance method for motor control device 1 according to the exemplary embodiment, when the user changes the second set value, the first set value is changed such that the first control parameter becomes equal to the second control parameter. As a result, the first set value can be changed only by changing the second set value.

In addition, in the adjustment assistance method for motor control device 1 according to the exemplary embodiment, when the user changes the second set value, the first frequency characteristic is recalculated based on the changed second set value, and the recalculated first frequency characteristic is displayed on display part 42. As a result, the first frequency characteristic corresponding to the changed second set value can be displayed on display part 42.

In addition, in the adjustment assistance method for motor control device 1 according to the exemplary embodiment, filter 123 included in controller 12 includes the notch filter. As a result, the first frequency characteristic corresponding to a type of filter 123 can be displayed on display part 42.

### (5) Modifications

The above-described exemplary embodiment is merely one of various exemplary embodiments of the present disclosure. The above-described exemplary embodiment can be variously changed in accordance with design and the like as long as the object of the present disclosure is achieved. In addition, functions similar to those of the adjustment assistance method for motor control device 1 according to the above-described exemplary embodiment may be embodied in adjustment assistance system 4 of motor control device 1, a program (computer program), a non-transitory recording medium recording the program, or the like. In addition, the adjustment assistance program for motor control device 1 according to one aspect is an adjustment assistance program for motor control device 1 for causing one or more processors to execute the above-described adjustment assistance method for motor control device 1. According to this adjustment assistance program, workability at the time of adjusting the control parameter can be improved.

Hereinafter, modifications of the above-described exemplary embodiment will be listed. The modifications to be described below can be applied in appropriate combination.

In addition, it is not an essential configuration for adjustment assistance system 4 that a plurality of functions in adjustment assistance system 4 are aggregated in one housing, and components of adjustment assistance system 4 may be provided in a distributed manner in a plurality of housings. Further, at least some of the functions of adjustment assistance system 4, for example, some of the functions of controller 43 may be implemented by a cloud (cloud computing) or the like.

On the contrary, in the above-described exemplary embodiment, at least some of the functions distributed between motor control device 1 and adjustment assistance system 4 may be integrated in one housing.

In the above-described exemplary embodiment, motor 2 includes detection part 3, but detection part 3 may be provided outside motor 2.

In the above-described exemplary embodiment, filter 123 is the notch filter, but may be a filter other than the notch filter. For example, as represented in Table 1, filter 123 may be a primary low-pass filter, a secondary low-pass filter, a primary phase advance compensation filter, a secondary phase advance compensation filter, a primary phase delay compensation filter, or a secondary phase delay compensation filter.

**[Table 1]**

| Filter name | Control parameter | | |
|---|---|---|---|
| Primary low-pass filter | Time constant | - | - |
| Secondary low-pass filter | Time constant | Attenuation term | - |
| Primary phase advance compensation filter | Time constant | Phase advance coefficient | - |
| Secondary phase advance compensation filter | Time constant | Phase advance coefficient | Attenuation term |
| Primary phase delay compensation filter | Time constant | Phase delay coefficient | - |
| Secondary phase delay compensation filter | Time constant | Phase delay coefficient | Attenuation term |

In a case where filter 123 is a primary low-pass filter, the control parameter is a time constant in the primary low-pass filter. In a case where filter 123 is a secondary low-pass filter, the control parameters are a time constant and an attenuation term in the secondary low-pass filter. In a case where filter 123 is a primary phase advance compensation filter, the control parameters are a time constant and a phase advance coefficient in the primary phase advance compensation filter. In a case where filter 123 is a secondary phase advance compensation filter, the control parameters are a time constant, a phase advance coefficient, and an attenuation term in the secondary phase advance compensation filter. In a case where filter 123 is a primary phase delay compensation filter, the control parameters are a time constant and a phase delay coefficient in the primary phase delay compensation filter. In a case where filter 123 is a secondary phase delay compensation filter, the control parameters are a time constant, a phase delay coefficient, and an attenuation term in the secondary phase delay compensation filter.

In addition, controller 12 may include two or more filters selected from the above-described various filters. That is, one or more filters 123 included in controller 12 may include at least one of the notch filter, the primary low-pass filter, the secondary low-pass filter, the primary phase advance compensation filter, the secondary phase advance compensation filter, the primary phase delay compensation filter, and the secondary phase delay compensation filter.

In the above-described exemplary embodiment, adjustment assistance system 4 is personal computer 40, but adjustment assistance system 4 is not limited to personal computer 40, and may be, for example, a smartphone or a tablet terminal.

In the above-described exemplary embodiment, as illustrated in Fig. 5, in the display step, the second frequency characteristic based on the second set value before being changed by the user is displayed as the second frequency characteristic on display part 42. By contrast, in the display step, the second frequency characteristic based on the second set value after being changed by the user may be displayed as the second frequency characteristic on display part 42. In addition, in the display step, as the second frequency characteristics, both the second frequency characteristic based on the second set value before being changed by the user and the second frequency characteristic based on the second set value after being changed by the user may be displayed on display part 42. That is, in the display step, as the second frequency characteristics, at least one of the second frequency characteristic based on the second set value before being changed by the user and the second frequency characteristic based on the second set value after being changed by the user may be displayed on display part 42.

In the above-described exemplary embodiment, motor 2 is the rotary servomotor. However, motor 2 is not limited to the rotary servomotor, and may be, for example, a linear servomotor capable of linearly moving.

In the above-described exemplary embodiment, as illustrated in Fig. 5, the first frequency characteristic and the second frequency characteristic are displayed to be superimposed on each other on display part 42. By contrast, the first frequency characteristic and the second frequency characteristic may be displayed to be vertically arranged on one screen of display part 42 without superimposing the first frequency characteristic and the second frequency characteristic on each other.

### (Aspects)

The following aspects are disclosed herein.

An adjustment assistance method for motor control device (1) according to a first aspect is an adjustment assistance method for motor control device (1) including controller (12), first calculation part (13), and second calculation part (14). Controller (12) generates torque command (C2) and outputs torque command (C2) to motor (2) in a manner that operation amount (AM1) detected by detection part (3) that detects operation amount (AM1) of motor (2) follows operation command (C1) of motor (2) based on the first set value. The first set value is a set value of a first control parameter input by a user. First calculation part (13) calculates a first frequency characteristic based on the second set value. The second set value is a set value of a second control parameter input by the user. The first frequency characteristic is a frequency characteristic of one or more filters (123) included in controller (12). Second calculation part (14) calculates a second frequency characteristic. The second frequency characteristic is a frequency characteristic of operation amount (AM1) with respect to operation command (C1) in a closed loop including controller (12). An adjustment assistance method for motor control device (1) includes an input step and a display step. In the input step, the input of the first set value and the second set value by the user is received. In the display step, the first frequency characteristic that is a calculation result of first calculation part (13) and the second frequency characteristic that is a calculation result of second calculation part (14) are displayed to be superimposed on each other on display part (42).

According to this aspect, in the display step, the first frequency characteristic that is the frequency characteristic of filter (123) and the second frequency characteristic that is the frequency characteristic of the closed loop including controller (12) are displayed to be superimposed on each other on display part (42), and it is possible to visually confirm how much the first frequency characteristic is to be adjusted from the display result of display part (42). Thus, workability at the time of adjusting the control parameter can be improved as compared with a case where only the second frequency characteristic is displayed on the display part.

In an adjustment assistance method for motor control device (1) according to a second aspect, in the first aspect, in the display step, at least one of the second frequency characteristic based on the second set value before being changed by the user and the second frequency characteristic based on the second set value after being changed by the user is displayed as the second frequency characteristic on display part (42).

According to this aspect, the second frequency characteristic based on the second set values before being changed and changed by the user can be displayed on display part (42).

An adjustment assistance method for motor control device (1) according to a third aspect further includes a change step in the first or second aspect. In the change step, when the user changes the second set value, the first set value is changed such that the first control parameter becomes equal to the second control parameter.

According to this aspect, the first set value can be changed only by changing the second set value.

In an adjustment assistance method for motor control device (1) according to a fourth aspect, in the third aspect, when the user changes the second set value, first calculation part (13) recalculates the first frequency characteristic based on the changed second set value. In the display step, the recalculated first frequency characteristic is displayed on display part (42).

According to this aspect, the first frequency characteristic corresponding to the changed second set value can be displayed on display part (42).

In an adjustment assistance method for motor control device (1) according to a fifth aspect, in any one of the first to fourth aspects, one or more filters (123) include at least one of a notch filter, a primary low-pass filter, a secondary low-pass filter, a primary phase advance compensation filter, a secondary phase advance compensation filter, a primary phase delay compensation filter, and a secondary phase delay compensation filter.

According to this aspect, the first frequency characteristic corresponding to the type of filter (123) can be displayed on display part (42).

An adjustment assistance program for motor control device (1) according to a sixth aspect is a program for causing one or more processors to execute the adjustment assistance method for motor control device (1) according to any one of the first to fifth aspects.

According to this aspect, in the display step, the first frequency characteristic that is the frequency characteristic of filter (123) and the second frequency characteristic that is the frequency characteristic of the closed loop including controller (12) are displayed to be superimposed on each other on display part (42), and it is possible to visually confirm how much the first frequency characteristic is to be adjusted from the display result of display part (42). Thus, workability at the time of adjusting the control parameter can be improved as compared with a case where only the second frequency characteristic is displayed on the display part.

An adjustment assistance system (4) for motor control device (1) according to a seventh aspect is adjustment assistance system (4) of motor control device (1) including controller (12), first calculation part (13), and second calculation part (14). Controller (12) generates torque command (C2) in a manner that operation amount (AM1) detected by detection part (3) that detects operation amount (AM1) of motor (2) follows operation command (C1) of motor (2) based on the first set value, and outputs torque command (C2) to motor (2). The first set value is a set value of a first control parameter input by a user. First calculation part (13) calculates a first frequency characteristic based on the second set value. The second set value is a set value of a second control parameter input by the user. The first frequency characteristic is a frequency characteristic of one or more filters (123) included in controller (12). Second calculation part (14) calculates a second frequency characteristic. The second frequency characteristic is a frequency characteristic of operation amount (AM1) with respect to operation command (C1) in a closed loop including controller (12). Adjustment assistance system (4) for motor control device (1) includes input part (41) and display controller (432). Input part (41) receives an input of a first set value and a second set value by a user. Display controller (432) displays a first frequency characteristic that is a calculation result of first calculation part (13) and a second frequency characteristic that is a calculation result of second calculation part (14) to be superimposed on each other on display part (42).

According to this aspect, the first frequency characteristic that is the frequency characteristic of filter (123) and the second frequency characteristic that is the frequency characteristic of the closed loop including controller (12) are displayed to be superimposed on each other on display part (42), and it is possible to visually confirm how much the first frequency characteristic is to be adjusted from the display result of display part (42). Therefore, workability at the time of adjusting the control parameter can be improved as compared with a case where only the second frequency characteristic is displayed on the display part.

The configurations according to the second to fifth aspects are not essential for the adjustment assistance method for motor control device (1), and can be omitted as appropriate.

### INDUSTRIAL APPLICABILITY

The adjustment assistance method for a motor control device, the adjustment assistance program for a motor control device, and the adjustment assistance system for a motor control device of the present disclosure can improve workability at the time of adjusting the control parameter. As described above, the adjustment assistance method for a motor control device, the adjustment assistance program for a motor control device, and the adjustment assistance system for a motor control device of the present disclosure are industrially useful.

### REFERENCE MARKS IN THE DRAWINGS

1: motor control device
2: motor
3: detection part
4: adjustment assistance system
12, 43, 121, 122: controller
13: first calculation part
14: second calculation part
41: input part
42: display part
123: filter
432: display controller
AM1: operation amount
C1: operation command
C2: torque command

## Claims

1. An adjustment assistance method for a motor control device including:
a controller that generates a torque command and outputs the torque command to the motor in a manner that an operation amount of a motor detected by a detection part that detects the operation amount follows an operation command of the motor based on a first set value that is a set value of a first control parameter input by a user,
a first calculation part that calculates a first frequency characteristic that is a frequency characteristic of one or more filters included in the controller based on a second set value that is a set value of a second control parameter input by the user, and
a second calculation part that calculates a second frequency characteristic that is a frequency characteristic of the operation amount with respect to the operation command in a closed loop including the controller,
the adjustment assistance method comprising:
receiving an input of the first set value and the second set value by the user; and
displaying the first frequency characteristic that is a calculation result of the first calculation part and the second frequency characteristic that is a calculation result of the second calculation part to be superimposed on each other on a display part.

2. The adjustment assistance method according to Claim 1, wherein,
in the displaying of the first frequency characteristic,
at least one of
the second frequency characteristic based on the second set value before being changed by the user and
the second frequency characteristic based on the second set value after being changed by the user
is displayed as the second frequency characteristic on the display part.

3. The adjustment assistance method according to Claim 1 or 2, further comprising
changing the first set value when the user changes the second set value, the first control parameter becoming equal to the second control parameter.

4. The adjustment assistance method according to Claim 3, wherein
the first calculation part recalculates the first frequency characteristic based on the changed second set value when the user changes the second set value, and
in the displaying of the first frequency characteristic, the recalculated first frequency characteristic is displayed on the display part.

5. The adjustment assistance method according to Claim 1 or 2, wherein the one or more filters include at least one of a notch filter, a primary low-pass filter, a secondary low-pass filter, a primary phase advance compensation filter, a secondary phase advance compensation filter, a primary phase delay compensation filter, and a secondary phase delay compensation filter.

6. An adjustment assistance program for a motor control device causing one or more processors to execute the adjustment assistance method according to Claim 1 or 2.

7. An adjustment assistance system for a motor control device including
a controller that generates a torque command in a manner that an operation amount of a motor detected by a detection part that detects the operation amount follows an operation command of the motor based on a first set value that is a set value of a first control parameter input by a user, and outputs the torque command to the motor,
a first calculation part that calculates a first frequency characteristic that is a frequency characteristic of one or more filters included in the controller based on a second set value that is a set value of a second control parameter input by the user, and
a second calculation part that calculates a second frequency characteristic that is a frequency characteristic of the operation amount with respect to the operation command in a closed loop including the controller,
the adjustment assistance system comprising:
an input part that receives an input of the first set value and the second set value by the user; and
a display controller that displays the first frequency characteristic that is a calculation result of the first calculation part and the second frequency characteristic that is a calculation result of the second calculation part to be superimposed on each other on a display part.
